# DEMANDE DE BREVET EUROPEEN

(11) **EP 1 676 746 A1**
(43) Date de publication de la demande: **05.07.2006**
(21) Numéro de dépôt: 05292795.1
(22) Date de dépôt: 26.12.2005
(51) Int. Cl.: B60Q 3/02

(54) **Dispositif d'éclairage intérieur d'un véhicule automobile comportant un moyen d'éclairage directionnel et un moyen d'éclairage d'ambiance**

(30) Priorité: 31.12.2004 FR 0414121
(71) Demandeur: PEUGEOT CITROËN AUTOMOBILES S.A., 78140 Velizy Villacoublay (FR); Hella KGaA Hueck & Co., 59552 Lippstadt (DE)
(72) Inventeur: Barre, Philippe, 94340 Joinville le Pont (FR); Bonfils, Xavier, 51100 Reims (FR); Serres, David, 51420 Witry les Reims (FR); Tarallo, Jean-Michel, 75016 Paris (FR); Mueller, Bernd, 79650 Schopfheim (DE); Schoene, Heiko, 79677 Schonau (DE); Zwick, Hubert, 70173 Stuttgart (DE)
(74) Mandataire: Lagrange, Jacques Etienne M.M.

(57) **Abrégé**

Le dispositif d'éclairage comporte au moins un ensemble (7) d'éclairage comprenant au moins une première source de lumière (16) et des moyens de diffusion et de réflexion (18, 19) de la lumière de la première source (16), vers l'habitacle (3) et au moins une seconde source de lumière reliée à une extrémité d'un conducteur de lumière (14) s'étendant dans une direction de l'habitacle du véhicule automobile. De préférence, la première source de lumière (16) est une diode émettrice de lumière à forte puissance et la seconde source lumineuse reliée au conducteur de lumière (14), une diode émettrice de lumière à faible puissance.

## Description

L'invention concerne un dispositif d'éclairage intérieur de l'habitacle d'un véhicule automobile assurant à la fois une fonction d'éclairage directionnel d'au moins une place d'un utilisateur du véhicule automobile dans l'habitacle et une fonction d'éclairage d'ambiance de l'habitacle.

Les véhicules automobiles comportent généralement un habitacle qui est délimité par des parties de carrosserie du véhicule et en particulier par des parties de carrosserie latérales ayant une disposition sensiblement verticale. De telles parties de carrosserie peuvent être des parties mobiles telles que des portes ou des parties fixes, par exemple des montants latéraux de l'habitacle.

L'habitacle d'un véhicule automobile doit comporter des moyens d'éclairage intérieur qui permettent de réaliser différentes fonctions. En particulier, il est nécessaire de disposer de moyens d'éclairage ayant une intensité suffisante pour permettre au conducteur du véhicule ou à des passagers d'examiner avec attention des objets ou des documents et en particulier de lire des documents, plus particulièrement pendant des arrêts du véhicule automobile. Un tel éclairage est généralement désigné comme éclairage de lecture à l'intérieur du véhicule automobile.

Il est également nécessaire de disposer de moyens permettant au conducteur ou aux passagers du véhicule automobile d'accéder facilement au poste de conduite ou à un siège de passager, après ouverture d'une porte du véhicule. De tels moyens permettent habituellement d'éclairer le côté latéral du véhicule automobile par lequel le conducteur ou le passager pénètre dans le véhicule automobile, en particulier au niveau du plancher de l'habitacle, ainsi qu'au moins une partie du siège qui doit être occupé par le conducteur ou le passager. Un tel moyen d'éclairage est généralement appelé éclairage d'accueil.

L'éclairage intérieur du véhicule automobile comporte également un éclairage d'ambiance diffusant une lumière à faible intensité, pratiquement dans toute la surface de l'habitacle.

L'un des moyens d'éclairage intérieur des véhicules automobiles les plus courants est constitué par un plafonnier situé au niveau supérieur de l'habitacle et généralement dans la partie antérieure de l'habitacle.

Un tel moyen classique est peu approprié pour accomplir les fonctions de lecture et d'accueil.

En outre, un tel éclairage en partie supérieure de l'habitacle peut être éblouissant pour le conducteur et les passagers.

Enfin, dans le cas des véhicules décapotables de type cabriolet, un système d'éclairage intérieur comportant uniquement des moyens d'éclairage en partie supérieure de l'habitacle est peu approprié.

On a donc proposé de disposer des moyens d'éclairage intérieur de l'habitacle, à mi-hauteur de l'habitacle. De tels moyens d'éclairage peuvent être disposés dans une partie de carrosserie délimitant latéralement l'habitacle, telle qu'une porte, par exemple à mi-hauteur de la porte, en dessous d'une vitre latérale.

De tels dispositifs d'éclairage, généralement rapportés, peuvent avoir un effet extrêmement défavorable sur l'esthétique de l'habitacle du véhicule automobile.

Il est donc souhaitable de disposer de moyens d'éclairage assurant les différentes fonctions requises et qui peuvent être facilement intégrés à un élément de la structure de l'habitacle du véhicule automobile, par exemple à la garniture d'une porte ou d'une paroi latérale de l'habitacle.

Le but de l'invention et donc de proposer un dispositif d'éclairage intérieur de l'habitacle d'un véhicule automobile assurant à la fois une fonction d'éclairage directionnel d'au moins une place d'un utilisateur du véhicule automobile dans l'habitacle et une fonction d'éclairage d'ambiance de l'habitacle, qui permette d'obtenir de très bonnes conditions de confort pour les utilisateurs du véhicule automobile et qui puisse être facilement intégré à un élément de structure de l'habitacle.

Dans ce but, le dispositif suivant l'invention comporte au moins un ensemble d'éclairage comprenant :
- au moins une première source de lumière et des moyens de diffusion et de réflexion de la lumière de la première source vers au moins une place d'utilisateur dans l'habitacle du véhicule automobile, et
   au moins une seconde source de lumière reliée à une extrémité d'un conducteur de lumière s'étendant dans une direction de l'habitacle, de manière que la lumière de la seconde source soit diffusée par le conducteur dans une zone au moins de l'habitacle du véhicule automobile.

Selon des caractéristiques plus particulières qui peuvent être prises isolément ou en combinaison :
- la première source de lumière est une diode émettrice de lumière à forte puissance ;
- la puissance de la première source est d'environ un watt ;
- la seconde source lumineuse comporte au moins une diode lumineuse à faible puissance reliée à un élément conducteur et diffuseur de lumière ;
- l'ensemble d'éclairage est disposé dans un espace à l'intérieur d'un panneau latéral délimitant l'habitacle du véhicule automobile communiquant avec l'habitacle par l'intermédiaire d'une ouverture à travers laquelle la première source lumineuse dirige un faisceau lumineux vers l'habitacle, par l'intermédiaire des moyens de diffusion et de réflexion de lumière et en vis-à-vis de laquelle est disposé, dans une direction longitudinale du véhicule automobile, le conducteur de lumière relié à l'au moins une seconde source lumineuse ;
- une plaque transparente est disposée suivant l'ouverture de communication entre l'espace interne de la paroi de l'habitacle du véhicule automobile et l'habitacle et le conducteur de lumière relié à l'au moins une seconde source lumineuse est fixé sur une face de la plaque transparente dirigée vers l'intérieur de l'espace dans le panneau latéral de l'habitacle du véhicule automobile.

Afin de bien faire comprendre l'invention, on va décrire, à titre d'exemple, en se référant aux figures jointes en annexe, un dispositif d'éclairage d'un véhicule automobile comportant un ensemble d'éclairage intégré à une porte du véhicule automobile.

La figure 1 est une vue en coupe par un plan vertical d'une partie supérieure d'un panneau de garniture d'une porte du véhicule automobile dans lequel est logé un ensemble d'éclairage suivant l'invention.

La figure 2 est une vue de dessous et en coupe suivant 2 de la figure 1.

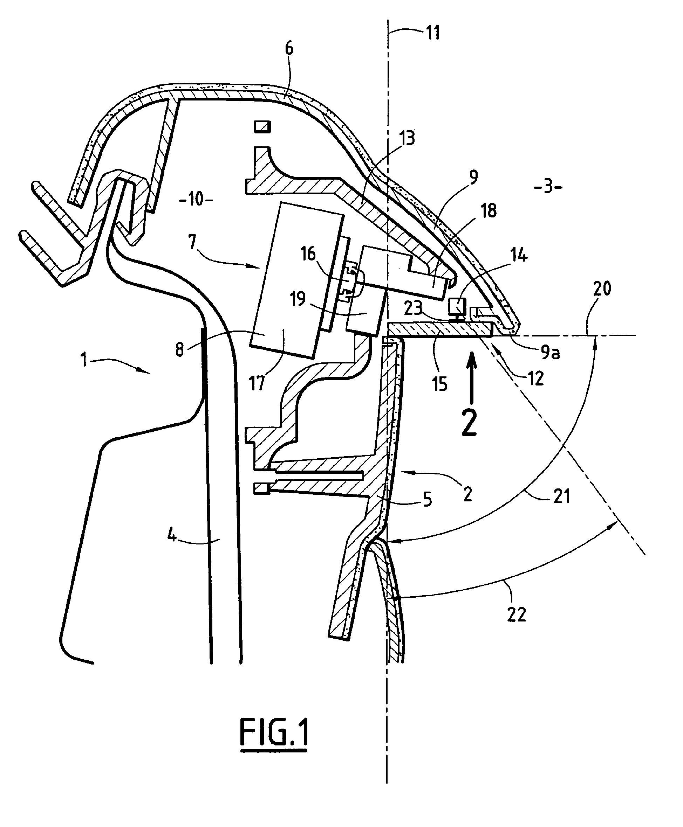

Sur la figure 1, on a représenté la partie supérieure d'un panneau d'une porte d'un véhicule automobile désigné de manière générale par le repère 1. La partie supérieure du panneau 2 de la porte 1 est disposée sensiblement à mi-hauteur de l'habitacle 3 du véhicule automobile en dessous d'une vitre latérale. Le panneau de porte 2 comporte une tôle de carrosserie 4 et une garniture 5 recouvrant la tôle 4 vers l'intérieur de l'habitacle 3 du véhicule automobile. La garniture 5 est constituée par un panneau en matière plastique recouvert extérieurement d'un habillage esthétique, en matière plastique ou en cuir.

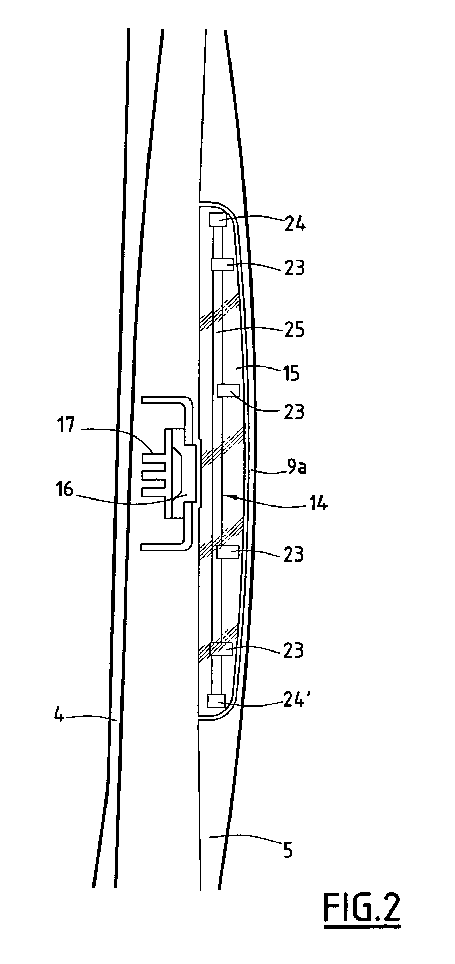

La partie supérieure du panneau de porte comporte un rebord arrondi 6 s'étendant suivant une partie au moins de la longueur de la porte dans la direction longitudinale du véhicule automobile et comportant une partie inférieure 9 ayant la forme d'une visière dirigée vers l'intérieur de l'habitacle 3 du véhicule automobile et terminée par un rebord 9a (voir figure 2) de forme courbe disposé sensiblement dans un plan horizontal et délimitant avec une partie sensiblement verticale du panneau de porte disposé suivant le plan vertical latéral 11, une ouverture 12 communiquant avec un espace 10 à l'intérieur du panneau de porte délimité par le rebord supérieur 6 du panneau de porte et par la partie 9 du rebord en forme de visière. A l'intérieur de l'espace intérieur 10, à la partie supérieure du panneau de porte, est disposé un ensemble d'éclairage 7 réalisé suivant l'invention et comportant un moyen d'éclairage directionnel 8 fixé par l'intermédiaire d'un support 13 sur la garniture 5 du panneau de porte 2 et un moyen d'éclairage d'ambiance 14 fixé sur une plaque transparente 15 fermant l'ouverture 12 ménagée entre le rebord courbe 9a de la partie 9 en forme de visière de la garniture du panneau de porte et la partie sensiblement plane de la garniture disposée suivant le plan vertical 11.

L'ensemble d'éclairage 7 réalisé sous forme compacte et logé dans l'espace supérieur 10 du panneau de porte assure à la fois l'éclairage directionnel et l'éclairage d'ambiance à l'intérieur de l'habitacle 3 du véhicule automobile.

Le moyen d'éclairage directionnel 8 comporte une source lumineuse 16 alimentée par la batterie du véhicule automobile et des moyens 18 et 19 réflecteur et diffuseur de la lumière de la source 16, de manière à produire un faisceau lumineux dirigé vers l'intérieur de l'habitacle du véhicule automobile à travers la plaque transparente 15 qui peut être en une matière plastique transparente et qui assure à la fois la fermeture et la protection de l'espace supérieur 10 du panneau de porte dans lequel est disposé l'ensemble d'éclairage 7 et le passage de la lumière.

La source lumineuse 16 du moyen d'éclairage 8 est constitué de préférence par une diode émettrice de lumière (DEL) de forte puissance associée à un moyen d'émission de lumière fournissant de préférence une lumière blanche.

Par exemple, la source 16 peut être constituée par un dispositif LUXEON (marque déposée par la société LUMILEDS) ayant une puissance d'environ un watt. Un tel moyen d'éclairage présente des avantages substantiels par rapport à une ampoule à incandescence.

A puissance et intensité lumineuse égales, un tel dispositif à diode présente un encombrement très sensiblement inférieur à une ampoule et produit moins de chaleur. Toutefois, dans certaines applications, la source lumineuse 16 pourrait être une ampoule à incandescence de type classique.

Le refroidisseur 17 est un refroidisseur à lamelles métalliques permettant d'évacuer la chaleur émise par la source lumineuse 16, par l'intermédiaire de lamelles métalliques de refroidissement en contact avec l'air ambiant. Les dispositifs réflecteur et diffuseur de lumière 18 et 19 peuvent être constitués par tout élément réfléchissant tel que des miroirs ou des prismes associés éventuellement à une lentille telle qu'une lentille sphérique.

Les moyens réflecteur et diffuseur de lumière 18 et 19 produisent un faisceau lumineux de très grande amplitude dirigé vers l'intérieur de l'habitacle 3 du véhicule automobile dans lequel le faisceau s'étend dans un espace situé en dessous du plan de trace 20 sur la figure 1. Le plan 20 délimitant le faisceau lumineux d'éclairage directionnel de l'habitacle peut être un plan horizontal situé sensiblement à mi-niveau de l'habitacle du véhicule automobile, c'est-à-dire à une distance sensiblement égale du plancher et du pavillon du véhicule automobile dont la surface intérieure délimite l'habitacle. Le plan 20 peut être également un plan faiblement incliné par rapport au plan horizontal situé légèrement en dessous du plan horizontal à mi niveau.

Dans tous les cas, le faisceau dirigé vers une place d'un utilisateur du véhicule automobile s'étend entièrement en dessous de la position des yeux de l'utilisateur assis à sa place dans l'habitacle.

L'amplitude du faisceau d'éclairage directionnel, dans un plan vertical, comme représenté sur la figure 1 (angle dièdre 21, entre le plan 20 et le plan vertical 11) est peu inférieure à 90°.

Le faisceau peut également avoir une amplitude très grande dans un plan horizontal ou sensiblement horizontal tel que le plan 20, de manière à éclairer une zone de l'habitacle s'étendant suivant la longueur du véhicule automobile.

Les moyens d'éclairage d'ambiance 14 qui sont fixés sur la face supérieure de la plaque transparente 15, à l'intérieur de l'espace 10 de la partie supérieure du panneau de porte, comportent deux diodes 24 et 24' émettrices de lumière à faible puissance fixées par l'intermédiaire d'un support sur la plaque transparente 15 et un conducteur de lumière 25 s'étendant suivant la longueur de la plaque 15, dans la direction longitudinale du véhicule automobile, relié, à une première extrémité, à la première diode émettrice de lumière 24 et, à sa seconde extrémité, à la seconde diode émettrice de lumière 24'. Le conducteur de lumière 25 qui peut être constitué par un tube diffuseur de lumière ou par des fibres optiques est fixé sur la plaque 15, par l'intermédiaire de supports 23.

Les diodes 24 à faible puissance émettent une lumière qui peut être blanche ou colorée et qui est diffusée dans l'habitacle du véhicule automobile à travers la plaque transparente 15 suivant toute la longueur du conducteur 25.

Comme il est visible sur la figure 1, le faisceau d'éclairage d'ambiance qui s'étend suivant la direction longitudinale du véhicule automobile présente une amplitude dans un plan vertical transversal de l'habitacle (angle 22) sensiblement inférieure à 90°, l'éclairage d'ambiance concernant surtout les zones proches du panneau de porte.

Le dispositif suivant l'invention comporte généralement plusieurs ensembles d'éclairage tels que l'ensemble 7 qui vient d'être décrit qui réalise à la fois un éclairage directionnel et un éclairage d'ambiance à l'intérieur de l'habitacle du véhicule automobile. L'éclairage directionnel peut être à la fois un éclairage de lecture pour un utilisateur du véhicule automobile et un éclairage d'accueil pour faciliter l'accès d'un utilisateur à sa place dans le véhicule automobile, dans le cas d'un éclairage extérieur faible ou de conditions de nuit.

Chacun des ensembles d'un dispositif d'éclairage suivant l'invention peut être placé dans une partie d'une paroi latérale du véhicule automobile, par exemple dans une porte ou dans une paroi latérale fixe à l'arrière d'un véhicule.

Chacun des ensembles d'éclairage peut être réalisé sous forme compacte, de sorte qu'il peut être logé facilement dans une paroi de l'habitacle du véhicule automobile, par exemple dans une partie de garniture. L'éclairage directionnel qui peut être de forte puissance permet, grâce à des moyens réflecteurs de lumière de diriger un faisceau dans une partie de l'habitacle du véhicule automobile, par exemple vers une place du conducteur ou d'un passager. Les moyens d'éclairage d'ambiance qui présentent des dimensions transversales faibles peuvent être facilement logés dans une paroi latérale du véhicule automobile et s'étendre sur une grande longueur dans la direction longitudinale.

Le dispositif suivant l'invention ne se limite pas strictement au mode de réalisation qui a été décrit.

La première source lumineuse d'éclairage directionnel et la seconde source lumineuse d'éclairage d'ambiance peuvent être réalisées sous une forme différente de celle qui a été décrite.

La seconde source lumineuse peut comporter un seul élément émetteur de lumière tel qu'une diode reliée à l'extrémité d'un conducteur de lumière, des éléments émetteurs de lumière reliés à chacune des extrémités du conducteur ou encore d'autres éléments émetteurs de lumière dans des positions intermédiaires entre les extrémités du conducteur, suivant la longueur d'un conducteur de lumière en un ou plusieurs tronçons.

L'invention s'applique à de nombreux types de véhicules automobiles, par exemple des cabriolets ou des véhicules convertibles coupés cabriolets ou encore des véhicules de type berline ou monospace.

## Revendications

1. Dispositif d'éclairage intérieur de l'habitacle (3) d'un véhicule automobile assurant à la fois une fonction d'éclairage directionnel d'au moins une place d'un utilisateur du véhicule automobile dans l'habitacle (3) et une fonction d'éclairage d'ensemble de l'habitacle (3), **caractérisé par le fait qu'**il comporte au moins un ensemble d'éclairage (7) comprenant :
- au moins une première source de lumière (16) et des moyens de diffusion et de réflexion (18, 19) de la lumière de la première source (16) vers au moins une place d'utilisateur dans l'habitacle (3) du véhicule automobile, et
- au moins une seconde source de lumière (24, 24') reliée à une extrémité d'un conducteur de lumière (25) s'étendant dans une direction de l'habitacle (3) du véhicule automobile, de manière que la lumière de la seconde source soit diffusée par le conducteur (25), dans une zone au moins de l'habitacle (3) du véhicule automobile.

2. Dispositif suivant la revendication 1, **caractérisé par le fait que** la première source de lumière (16) est une diode émettrice de lumière à forte puissance.

3. Dispositif suivant la revendication 2, **caractérisé par le fait que** la puissance de la première source (16) est d'environ un watt.

4. Dispositif suivant l'une quelconque des revendications 1 à 3, **caractérisé par le fait que** la seconde source lumineuse (24, 24') comporte au moins une diode lumineuse à faible puissance reliée à un élément conducteur et diffuseur de lumière (25).

5. Dispositif suivant l'une quelconque des revendications 1 à 4, **caractérisé par le fait que** l'ensemble d'éclairage (7) est disposé dans un espace (10) à l'intérieur d'un panneau latéral (2) délimitant l'habitacle du véhicule automobile communiquant avec l'habitacle (3) par l'intermédiaire d'une ouverture (12) à travers laquelle la première source lumineuse (16) dirige un faisceau lumineux vers l'habitacle (3), par l'intermédiaire des moyens de diffusion et de réflexion de lumière (18, 19) et en vis-à-vis de laquelle est disposé, dans une direction longitudinale du véhicule automobile, le conducteur de lumière (25) relié à l'au moins une seconde source lumineuse (24).

6. Dispositif suivant la revendication 5, **caractérisé par le fait qu'**une plaque transparente (15) est disposée suivant l'ouverture (12) de communication entre l'espace interne (10) de la paroi de l'habitacle (3) du véhicule automobile et l'habitacle (3) et que le conducteur de lumière (25) relié à l'au moins une seconde source lumineuse (24, 24') est fixé sur une face de la plaque transparente (15) dirigée vers l'intérieur de l'espace (10) dans le panneau latéral (2) de l'habitacle (3) du véhicule automobile.
